Europäisches Patentamt

European Patent Office

Office européen des brevets

(19)

(11) Veröffentlichungsnummer: **0 127 042 B1**

(12) **EUROPÄISCHE PATENTSCHRIFT**

(45) Veröffentlichungstag der Patentschrift: **14.08.91**

(51) Int. Cl.5: **G02B 6/44**

(21) Anmeldenummer: **84105414.1**

(22) Anmeldetag: **12.05.84**

(54) **Optisches Kabel.**

(30) Priorität: **28.05.83 DE 3319433**

(43) Veröffentlichungstag der Anmeldung:
**05.12.84 Patentblatt 84/49**

(45) Bekanntmachung des Hinweises auf die
Patenterteilung:
**14.08.91 Patentblatt 91/33**

(84) Benannte Vertragsstaaten:
**AT BE CH DE FR GB IT LI SE**

(56) Entgegenhaltungen:
**EP-A- 0 042 996       DE-A- 2 513 722
DE-A- 2 556 861       DE-A- 3 112 422
DE-C- 3 010 353       GB-A- 1 461 151**

(73) Patentinhaber: **ALCATEL N.V.
Strawinskylaan 537 (World Trade Center)
NL-1077 XX Amsterdam(NL)BE CH FR GB IT
LI SE AT**

Patentinhaber: **kabelmetal electro GmbH
Kabelkamp 20
W-3000 Hannover 1(DE)DE**

(72) Erfinder: **Kimmich, Klaus
Hohentwielstrasse 14
W-7000 Stuttgart 1(DE)**

(74) Vertreter: **Mende, Eberhard, Dipl.-Ing. et al
kabelmetal electro GmbH Kabelkamp 20
Postfach 260
W-3000 Hannover 1(DE)**

## Beschreibung

Die Erfindung bezieht sich auf ein optisches Kabel gemäß dem Oberbegriff des Anspruchs 1.

Aus der DE-PS 30 02 498 ist ein Nachrichtenkabel mit mehreren Lichtwellenleitern bekannt, die je eine primäre und eine sekundäre Beschichtung aufweisen und die miteinander um ein zentrales Element zu einem Verbund verseilt sind. Um den verseilten Verbund ist eine Haltewendel gelegt, die den Verbund zusammenhalten soll. Da die Haltewendel fest auf den Lichtwellenleitern aufsitzt, besteht die Gefahr, daß auf diese Kräfte ausgeübt und sie mechanisch beansprucht werden. Um eine Deformation der Lichtwellenleiter zu vermeioen, ist das Nachrichtenkabel mit einer Füllmasse gefüllt, die den Stoff der Haltewendel erweicht oder ihn zerfallen läßt, so daß nur während der Herstellung des Nachrichtenkabels die Haltewendel Kräfte auf die Lichtwellenleiter ausübt.

Bekanntlich strahlt jeder dielektrische Wellenleiter, sobald seine Achse von einer Geraden abweicht. Die Strahlung hängt sehr vom Krümmungsradius ab und steigt von vernachlässigbar kleinen Werten schnell auf nicht mehr vertretbare Verluste an. Bei monomodalen Lichtwellenleitern kommt noch die nachteilige Beeinflussung der Grenzwellenlänge von Moden verschiedener Ordnung hinzu.

Der Erfindung liegt die Aufgabe zugrunde, ein optisches Kabel anzugeben, bei dem nicht nur die aus dem Kabelaufbau kommenden Kräfte aufgehoben, sondern auch von außen einwirkende Kräfte von den Lichtwellenleitern ferngehalten werden.

Diese Aufgabe wird durch die im Anspruch 1 angegebenen Mittel gelöst. Ausgestaltungen können den Unteransprüchen entnommen werden.

Beim erfindungsgemäßen optischen Kabel werden durch das im Abstand zu den Lichtwellenleitern vorhandene Stützrohr die von außen kommenden radial wirksamen Kräfte abgefangen. Solche Kräfte entstehen entweder bereits bei der Herstellung des Kabelmantels oder sie treten zusätzlich beim Umtrommein oder Verlegen der Kabel auf. Da der innerhalb des Stützrohrs gelegene Verbund der Lichtwellenleiter nicht mit einer Bebänderung, Bewicklung oder einer Wendel versehen ist, kann/können sich der/die Lichtwellenleiter frei expandieren und damit einen kräftefreien Verbund bilden.

Ein optisches Kabel nach dem Oberbegriff des Anspruchs 1 ist aus der DE-PS 30 10 353 bekannt. Der Kabelaufbau entspricht einer Hohlader, deren Mantel .eine Innenhülle und eine Außenhülle umfaßt. Die Innenhülle besteht aus einer oder mehreren mit Schlag gewickelten Folien, auf welche die Außenhülle extrudiert ist. Im Innern des Kabelmantels ist wenigstens ein Lichtwellenleiter lose angeordnet. Außerdem kann der übrige Raum eine Füllmasse enthalten.

Der verseilte Verbund sorgt für definierte Krümmungsradien der Lichtwellenleiter, wobei mit der Schlaglänge die Dehnungsreserve bestimmbar ist, welche gegenüber dem Kabelmantel die gewünschte Überlänge garantiert. Mit der angegebenen Schlaglänge für das Wickeln der inneren Folie läßt sich das Stützrohr wirtschaftlich und mechanisch stabil herstellen. Der Gegenschlag zum Verbund verhindert dabei, daß dieser die Folie bei Berührung aufdreht.

Die Erfindung wird nun anhand von Zeichnungen zweier Ausführungsbeispiele näher erläutert. Es zeigen:

Fig. 1      einen Querschnitt einer ersten Ausführung eines optischen Kabels;

Fig. 2      ein abgesetztes Ende des Kabels gemäß Fig. 1;

Fig. 3      einen Querschnitt einer zweiten Ausführung eines optischen Kabels und

Fig. 4      ein abgesetztes Ende des Kabels gemäß Fig. 3.

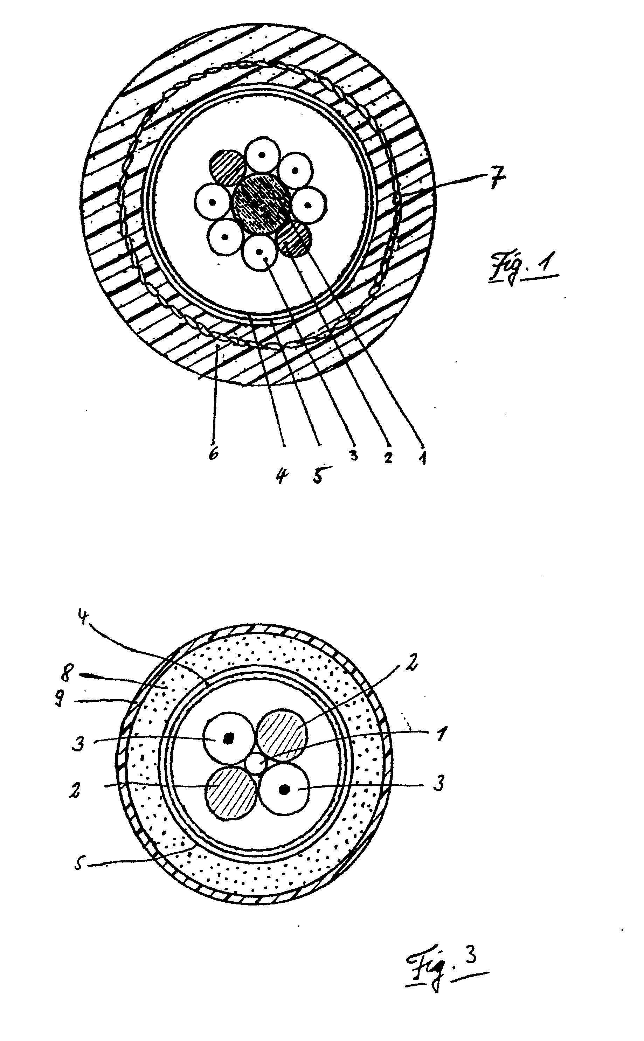

Das in Fig. 1 dargestellte optische Kabel weist ein zentrales Element 1 auf, das als zugfestes Element ausgebildet sein kann und dann hierzu aus Glasfasergarn besteht. Auf das Element 1 sind sechs Lichtwellenleiter 3 und zwei Blindelemente 2 verseilt. Die Anzahl der Lichtwellenleiter 3 und der Blindelemente 2 ist nur als Beispiel anzusehen, es ist auch jede andere Anzahl von Lichtwellenleitern 3 ohne oder mit den entsprechenden Blindelementen 2 möglich. Die Lichtwellenleiter 3 sind primär und sekundär beschichtete Lichtwellenleiter. Die als Füller wirkenden Blindelemente 2 weisen den gleichen Durchmesser wie die Lichtwellenleiter 3 auf und bestehen beispielsweise aus Polyamid. Dieser so gebildete Verbund aus dem zentralen Element 1 und den Lichtwellenleitern 3 und Blindelementen 2 ist frei beweglich in einem flexiblen Stützrohr 4,5 angeordnet.

Das flexible Stützrohr 4,5 besteht aus einer temperaturbeständigen Folie 4 und einer temperaturbeständigen Deckfolie 5. Die innere Folie 4 ist im nicht gewickelten Zustand biegesteif, etwa 75 $\mu$m dick und besteht aus Polyäthylenterephthalat (PETP). Sie ist im Gegenschlag zum Verbund überlappt gewickelt und bildet so das flexible Stützrohr. Die Schlaglänge ist dabei kleiner als der zehnfache Durchmesser des Verbundes. Die Schlaglänge entspricht gleich der zweifachen Breite der Folie 4. Dabei stellt sich eine ausreichende uberlappung ein. Um zu verhindern, daß das aus der Folie 4 gewickelte Stützrohr aufgrund der an sich biegesteifen Folie aufspringt, ist darüber die Deckfolie 5 gewickelt.

Die Deckfolie 5 besteht aus einem 0,4 mm dicken Schaumlaminat aus Polyäthylenterephthalat (PETP). Sie ist im Gegenschlag zur Folie 4 auf diese gewickelt. Die Schlaglänge ist dabei so gewählt, daß eine Bewicklung auf Stoß oder eine geringfügige uberlappung entsteht. Die Folie 5 deckt gleichzeitig die Spalten der Folie 4 ab, so daß bei der Aufbringung eines während des Aufbringens plastischen oder flüssigen Kabelmantels kein Material von diesem in das Stützrohr und eventuell an die Lichtwellenleiter gelangt.

Der Kabelmantel (6) enthält zugfeste Elemente, die beispielsweise aus parallel laufenden Fäden, einem Geflecht 7 oder einen Gitternetzband bestehen. Der Kabelmantel ist direkt auf dem Stützrohr aus den Folien 4 und 5 aufgebracht.

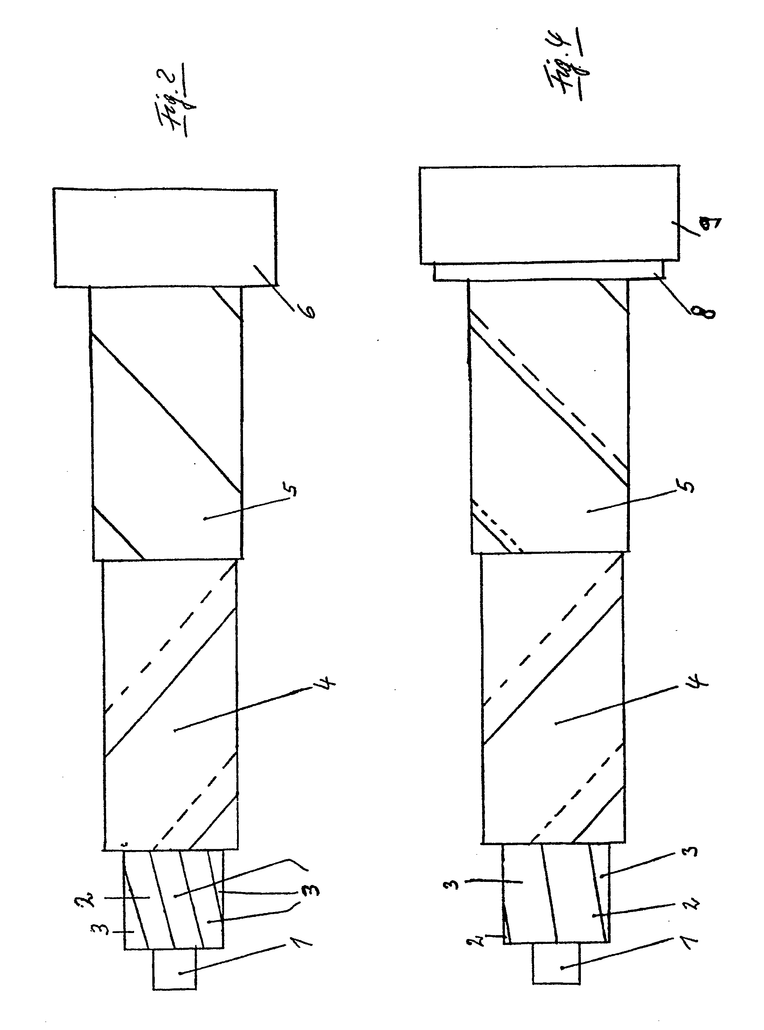

In Fig. 2 ist ein Ende des in Fig. 1 dargestellten optischen Kabels gezeigt, bei dem der Kabelmantel 6 und die darunter liegenden Teile des Kabels teilweise entfernt sind. Es ist zu erkennen, daß die Folie 5 auf Stoß und die Folie 4 überlappt gewickelt ist und die Lichtwellenleiter 3 und die Folien jeweils im Gegenschlag gewickelt sind.

In Fig. 3 ist eine weitere Ausführung eines optischen Kabels im Querschnitt dargestellt. Die Mikrokrümmungsempfindlichkeit optischer Kabel hängt neben ihrem Aufbau entscheidend vom thermischen Ausdehnungskoeffizienten des gesamten Kabelaufbaus ab. Da optische Kabel im wesentlichen aus Kunststoff mit einem relativ hohen Aus-dehnungskoeffizienten bestehen, ist zur Verbesse-rung der Tieftemperatureigenschaften ein besonde-rer Aufbau zu wählen. Nachfolgend wird ein metallfreies, leichtes Kabel beschrieben, das nicht durch elektrische Felder beeinflußt werden kann und das eine hohe Blitzsicherheit aufweist. Dessen Verbund besteht aus zwei Lichtwellenleitern 3, die zusammen mit zwei Blindelementen 2 um ein zentrales Element 1 mit einem Schlag verseilt sind. Das zentrale Element 1 dient hierbei lediglich als Grundlage zum Verseilen. Das darüber im Abstand angebrachte Stützrohr besteht wieder aus den beiden Folien 4 und 5. In diesem Falle ist auch die Deckfolie 5 überlappt gewickelt. Der Kabelmantel 8 besteht bei dieser Ausführung aus einem gehärteten Harzsystem als Matrix mit darin eingebetteten und davon durchtränkten, orientierten Verstärkungsfasern als Armierung. Darüber ist eine Schutzhülle 9 angeordnet, die z. B. aus Polyäthylen (PE) bestehen und mit Ruß versetzt sein kann.

In Fig. 4 ist ein Ende des in Fig. 3 dargestellten Kabels gezeigt, bei dem die Schutzhülle 9 und die darunterliegenden Teile des Kabels teilweise entfernt sind. Es ist ersichtlich, daß die Lichtwellenleiter 3 und die Blindelemente 2 mit einem Schlag verseilt, die Folien 4 und 5 überlappt gewickelt und alle diese drei Teile im Gegenschlag zueinander aufgebracht sind.

Es kann auch ein Verbund aus einem oder mehreren nicht verseilten Lichtwellenleitern gewählt werden, in dem längslaufende Fäden ohne Verseilschlag als Zugelemente angeordnet sind.

Die Herstellung des Stützrohrs aus der überlappt gewickelten temperaturbeständigen inneren Folie und der darauf gewickelten Deckfolie geschieht zweckmäßigerweise gleichzeitig mit dem Herstellen des Verbundes. Hierzu werden ein oder mehrere schnellaufende Zentralspinner eingesetzt, durch welche eine hohe Fertigungsgeschwindigkeit erzielt werden kann. Zum Aufbringen des Stützrohrs können die Zentralspinner mit einem stimmgabelförmigen Wickeldorn versehen sein.

## Patentansprüche

1. Optisches Kabel mit einer Seele aus mindestens einem Lichtwellenleiter (3) und einem mit Abstand um die Seele angebrachten, flexiblen Stützrohr (4,5) aus mehreren mit Schlag übereinander gewickelten, temperaturbeständigen Folien und einem auf dem Stützrohr aufliegenden Kabelmante (6,8),
 **dadurch gekennzeichnet,** daß der Kabelmantel (6, 8) zugfeste Elemente enthält und daß der primär und sekundär beschichtete Lichtwellenleiter (3) und mindestens ein weiteres Element (1) zu einem Verbund verseilt sind und daß das Stützrohr (4,5) aus einer im Gegenschlag zum Verbund überlappt gewickelten inneren Folie (4) und einer darauf im Gegenschlag gewickelten Deckfolie (5) besteht, wobei die innere Folie (4) biegesteif ist und eine Schlaglänge aufweist, die kleiner als der zehnfache Durchmesser des Verbundes ist und etwa die zweifache Breite der Folie (4) hat.

2. Optisches Kabel nach Anspruch 1, dadurch gekennzeichnet, daß der Kabelmantel (8) aus einem gehärteten Harzsystem als Matrix mit darin eingebetteten und davon durchtränkten, orientierten Verstärkungsfasern als Armierung besteht.

3. Optisches Kabel nach Anspruch 1, dadurch gekennzeichnet, daß im Kabelmantel (6) ein Geflecht (7) oder ein Gitternetzband angeordnet ist.

4. Optisches Kabel nach Anspruch 1, dadurch gekennzeichnet, daß die innere Folie (4) aus Polyäthylenterephthalat (PETP) besteht.

5. Optisches Kabel nach Anspruch 1, dadurch gekennzeichnet, daß die innere Folie (4) 75 $\mu$m dick ist.

6. Optisches Kabel nach Anspruch 1, dadurch gekennzeichnet, daß die obere Folie (5) als Deckfolie aus einer Schaumfolie besteht.

7. Optisches Kabel nach Anspruch 6, dadurch gekennzeichnet, daß die Deckfolie (5) aus Polyäthylenterephthalat (PETP) Schaumlaminat besteht.

## Claims

1. Optical cable with a core consisting of at least one optical waveguide (3) and of a flexible supporting tube (4,5) disposed at a distance around the core and consisting of a plurality of overlappingly wound high-temperature-resistant foils and of a cable sheath (6,8) lying on said supporting tube, characterized in that said cable sheath (6,8) contains tension-proof elements and that the primary- and secondary-coated optical waveguides (3) and at least one further element (1) are cabled to form a compound member and that said supporting tube (4,5) consists of an inner foil (4) wound overlappingly in the opposite direction of lay to the compound member and of a covering foil (5) wound thereover in the opposite direction of lay, said inner foil (4) being resistant to bending and having a length of lay which is smaller than ten times the diameter of the compound member and about twice the width of the foil (4).

2. An optical cable as claimed in Claim 1, characterized in that said cable sheath (8) consists of a cured resin system as a matrix with oriented reinforcing fibres embedded therein and impregnated therewith as an armour.

3. An optical cable as claimed in Claim 1, characterized in that a braid (7) or a tape network is arranged in said cable sheath (6).

4. An optical cable as claimed in Claim 1, characterised in that said inner foil (4) consists of polyethylene terephthalate (PETP).

5. An optical cable as claimed in Claim 1, characterized in that said inner foil (4) has a thickness of 75$\mu$m.

6. An optical cable as claimed in Claim 1, characterised in that said upper foil (5), as a covering foil, consists of a foamed foil.

7. An optical cable as claimed in Claim 6 , characterized in that said covering foil (5) consists of a polyethylene terephthalate (PETP) foam laminate.

## Revendications

1. Câble optique avec une âme comprenant au moins un conducteur d'ondes lumineuses (3) et un tube de protection (4,5) flexible disposé avec un écart autour de l'âme et constitué de plusieurs feuilles résistant à la température enroulées en hélice les unes sur les autres et une gaine de câble (6,8) disposée sur le tube de protection
caractérisé en ce que la gaine de câble (6,8) comporte un élément résistant à la traction et en ce que le conducteur d'ondes lumineuses (3) avec couches primaire et secondaire et au moins un autre élément (1) sont câblés en un composite
et en ce que le tube de protection (4,5) est constitué d'une feuille (4) intérieure enroulée autour et dans le sens inverse du composite et une feuille de couverture (5) enroulée par-dessus la feuille intérieure et en sens inverse, dans lequel la feuille intérieure (5) est raide et présente un pas qui est plus petit que dix fois le diamètre du composite et qui a environ deux fois la largeur de la feuille (4).

2. Câble optique selon la revendication 1, caractérisé en ce que la gaine de câble (8) est constituée d'un système de résine durcissable comme matrice et de fibres de renforcement servant d'armature qui sont orientées, noyées à l'intérieur et imprégnées avec la résine.

3. Câble optique selon la revendication 1, caractérisé en ce que dans la gaine de câble est disposé un treillis (7) ou une bande de filet grillagé.

4. Câble optique selon la revendication 1, caractérisé en ce que la feuille interne (4) est constituée de téréphtalate de polyéthylène (PETP).

5. Câble optique selon la revendication 1, caractérisé en ce que la feuille (4) interne à 75 um d'épaisseur.

6. Câble optique selon la revendication 1, caractérisé en ce que la feuille externe servant de feuille de recouvrement est constituée d'une feuille en mousse.

7. Câble optique selon la revendication 6, caractérisé en ce que la feuille de recouvrement (5) est constituée d'un laminé de mousse en téréphtalate de polyéthylène (PETP).

_Fig. 1_

_Fig. 3_

Fig. 2

Fig. 4